# EUROPEAN PATENT SPECIFICATION

(11) **EP 3 684 631 B1**
(45) Date of publication and mention of the grant of the patent: **30.06.2021**
(21) Application number: 18774149.1
(22) Date of filing: 14.09.2018
(51) Int. Cl.: B60B 27/00, B60B 3/12, B29C 43/18

(54) **WHEEL HUB OF A MOTOR VEHICLE AND RELATED MOTOR VEHICLE WHEEL**
RADNABE EINES KRAFTFAHRZEUGS UND ZUGEHÖRIGES KRAFTFAHRZEUGRAD
MOYEU DE ROUE D'UN VÉHICULE À MOTEUR ET ROUE DE VÉHICULE À MOTEUR ASSOCIÉE

(30) Priority: 22.09.2017 IT 201700106143
(43) Date of publication of application: 29.07.2020
(73) Proprietor: PIAGGIO & C. S.p.A., 56025 Pontedera (Pisa) (IT)
(72) Inventor: CITTI, Tullio, I-56025 Pontedera (Pisa) (IT); PETRINI, Francesco, I-56025 Pontedera (Pisa) (IT); PICCIOLI, Massimiliano, I-56025 Pontedera (Pisa) (IT); ROSELLINI, Walter, I-56025 Pontedera (Pisa) (IT)
(74) Representative: Mitola, Marco
(86) International application number: PCT/IB2018/057036
(87) International publication number: WO 2019/058236

(56) References cited:
- EP-A1- 3 170 678
- WO-A1-2014/027068
- CN-U- 205 273 030
- JP-A- 2012 035 568
- KR-A- 20150 119 561

## Description

### FIELD OF APPLICATION

The present invention relates to a wheel hub of a motor vehicle.

Furthermore, the present invention relates to a motor vehicle wheel comprising said wheel hub.

### STATE OF THE ART

The wheel hub is a tubular element which defines a coupling hole for a wheel axle of a motor vehicle. The tubular element is integrally mounted in a seat made in the wheel, generally by a casting process.

An example of a wheel hub is described in document IN201506804. Being a part subject to considerable stress, the need to reinforce it structurally is felt. The document IN201506804 describes a wheel hub with a plurality of ribs, which extend axially; the ribs are spaced radially around the outer surface.

The ribs extend between a surface with a smaller diameter and a surface with a larger diameter so that they are elevated with respect to the larger diameter surface.

In the intermediate zones between the ribs, at the surface with a larger diameter, the axial end edge has little mechanical strength. Another solution of prior art is disclosed by JP2012035568 A.

### PRESENTATION OF THE INVENTION

The purpose of the present invention is thus to provide a wheel hub of a motor vehicle able to overcome the drawbacks of the hub of the prior art, which proves mechanically resistant to the loads to which it is subject.

A further purpose of the present invention is to provide a wheel hub of a motor vehicle which is simple to construct.

Another purpose of the present invention is to provide a wheel of a motor vehicle which achieves said purposes.

These and other purposes are achieved by a wheel hub comprising:
a tubular body having a coupling opening which is suitable to receive a wheel axis;
wherein said tubular body comprises:
   a first section with a smaller diameter;
   a second section with a larger diameter axially opposite said first section;
   a third section with an intermediate diameter with respect to said first section and said second section, arranged axially in an intermediate position between said first and said second section;
   said larger diameter being greater than said intermediate diameter which in turn is greater than said smaller diameter;
   a plurality of radially spaced ribs extending in an axial direction on the tubular body between said first section, said third section and said second section.

Each rib comprises a ridge, i.e. a head surface, which varies axially from a value equal to the smaller diameter to a maximum value. These ridges are ideally joined by a circle having a diameter called maximum rib diameter.

Said maximum rib diameter may be less than or equal to the larger diameter of said second section.

In particular, the tubular body comprises three differential diameter sections: a smaller diameter section, a larger diameter section, opposite the smaller diameter section, and an intermediate diameter section between the smaller section and the larger section.

The sections are preferably connected to each other by inclined walls.

The tubular body comprises at least two ribs, in particular a plurality of ribs, which extend axially, spaced radially relative to each other. The spacing of the ribs is preferably at a constant pitch.

Each rib extends between the smaller section, from which the base of the rib extends, crosses the intermediate section and joins the larger section. In this way, the ridge of each rib, i.e. the outermost surface of the rib, connects in a coplanar manner to the larger diameter section or to a level between the larger diameter section and the intermediate diameter section.

This construction variant makes it possible to obtain a solid end section and, therefore, structurally more resistant, in particular to torsional loads.

In a first embodiment, said maximum rib diameter is equal to said larger diameter of said second section, so that the ridge of each rib is connected coplanar to said second section.

In a second embodiment, said maximum rib diameter is inferior to said larger diameter of said second section, so that the ridge of each rib is connected at a level below said second section.

Preferably, the differential value defined as the difference between said larger diameter and the maximum rib diameter is between 0.5mm e 10mm, in particular between 2mm e 8mm.

Advantageously, a fourth section is provided arranged adjacent to said second section, wherein the diameter of said fourth section is less than the diameter of said second section.

Thus, between the second larger diameter section and the fourth section an abutment wall is defined that ensures a stable axial coupling in the coupling seat made in the wheel.

Advantageously, the coupling opening comprises a first portion and a second portion, wherein the second portion has a larger diameter than said first portion.

According to another aspect of the invention a wheel of a motor vehicle is provided comprising a housing seat, wherein a hub is integrally mounted in said housing seat.

According to a further aspect of the invention a motor vehicle comprising a wheel fitted with the wheel hub is described.

### DESCRIPTION OF THE DRAWINGS

Further characteristics and advantages of the present invention will be more clearly comprehensible from the description given below of its preferred and non-limiting embodiments, wherein:
- Figure 1 is a cross-section view of a wheel of a motor vehicle comprising a wheel hub according to the present invention;
- Figure 2 is a partial cross-section view of the wheel hub according to the present invention;
- Figure 3 is a perspective view of the wheel hub in figure 2 according to a first perspective;
- Figure 4 is a perspective view of the wheel hub in figure 2 in a second perspective.

### DETAILED DESCRIPTION

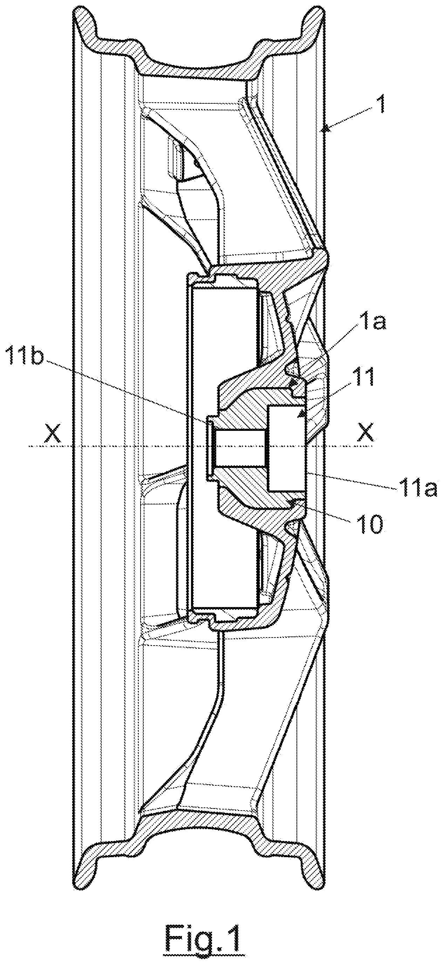

With reference to Figure 1, a motor vehicle wheel 1 is shown which comprises a wheel hub 10 mounted in a dedicated coupling seat 1a, according to the present invention.

In particular, the wheel hub 10 comprises a tubular body 30 with a coupling opening 11 suitable to receive a wheel axle (not shown), onto which the motor vehicle wheel is connected so as to rotate.

The tubular body 30 comprises a first section 12 with a smaller diameter d1, a second section 14 with a larger diameter d4 axially opposite the first section 12, and a third section 13 with an intermediate diameter d3 with respect to the diameter of the first section 12 and of the second section 14. The third section 13 is arranged axially in an intermediate position between the first section 12 and the second section 14.

The first section 12 is substantially at a first end I of the tubular body 30, while the second section 14 is at a second end II, opposite the first end I.

The tubular body 30 further comprises a plurality of radially spaced ribs 15 extending in an axial direction X-X between the first section 12, the third section 13 and the second section 14.

The ribs 15 thus have a profile with increasing cross-sections in the axial direction X-X of the tubular body 30. The spacing of the ribs 15 is preferably at a constant pitch.

Each rib 15 comprises a ridge 15a, i.e. a head surface, which varies axially from a value equal to the diameter d1 to a maximum value d2.

The maximum rib diameter d2 may be less than or equal to the diameter d4 of the second section 14.

In other words, the tubular body 30 comprises three sections with different diameters. Each section defines an outer lateral surface with differentiated diameter. The sections are preferably connected to each other by a first and a second inclined wall 16 and 17.

The first inclined wall 16 joins the second section 14 with the third section 13, while the second inclined wall joins the third section with the first section 12.

Each rib 15 extends between the first section 12, from which the base of the rib 15 extends, crosses the intermediate section 13 and joins the larger section 14, such that the ridge 15a of each rib 15, i.e. the outermost surface of the rib 15, connects in a coplanar manner to the second section 14 with a larger diameter or at a lower level, between the second section 14 with a larger diameter and the third section 13 with an intermediate diameter.

This construction variant makes it possible to obtain a solid and structurally more resistant end section, in particular to torsional loads.

In a first embodiment, the rib diameter d2 is equal to the diameter d4 of the second section 14 such that the ridge 15a of each rib 15 is connected in a coplanar manner to the second section 14.

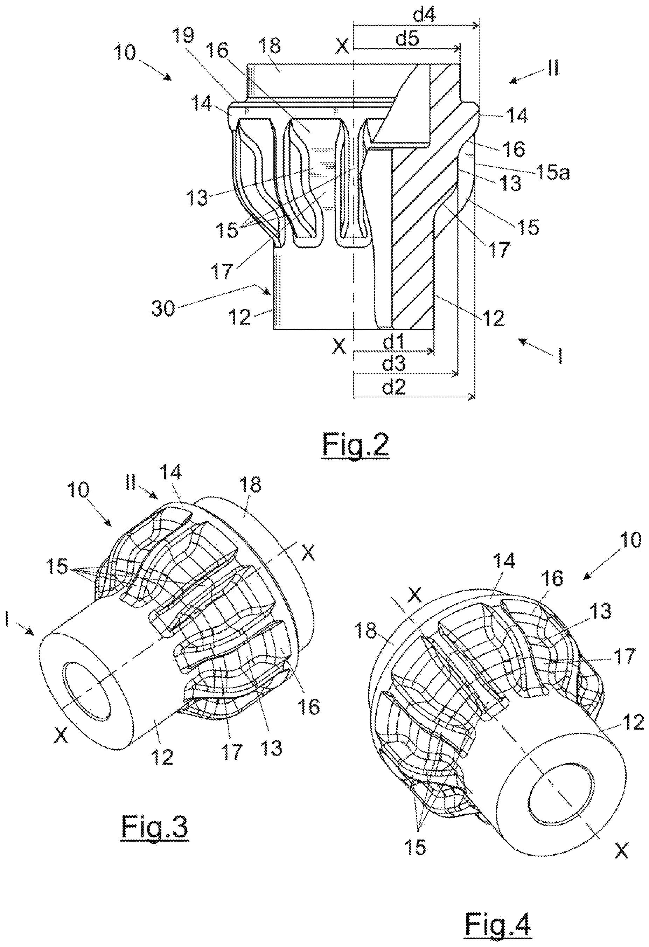

In a second embodiment, the rib diameter d2 is less than the diameter d4 of the second section 14 so that the ridge 15a of each rib 15 connects to a level below the second section 14 (Fig.2).

Preferably, the delta differential value, defined as the difference between the diameter d4 and the diameter d2, is between 0.5mm and 10mm, in particular between 2mm and 8mm.

The tubular body 30 further comprises a fourth section 18 with diameter d5 arranged adjacent to the second section 14. The diameter d5 is less than the diameter d4. Thus, between the second 14 larger diameter section d4 and the fourth section 18 an abutment wall 19 is defined which ensures a stable axial coupling in the coupling seat made in the wheel.

The coupling opening 11 comprises a first portion and a second portion, wherein the second portion has a diameter greater than the first portion.

The motor vehicle wheel 1 comprises a housing seat 1a in which the wheel hub 10 is integrally mounted, as defined above.

In particular, during the hub coupling phase in the wheel housing seat 1a, a preheating 10 of the hub is provided for and the outer surface of the hub is machined with shot blasting so as to obtain a rough outer surface, preferably with roughness Rz value greater than 100.

Shot blasting reduces the generation of an iron oxide layer which forms in the preheating phase.

The hub 10 thus machined can then be suitably inserted into a mould inside which the molten material of the wheel 1 is cast. Once the material of the wheel 1 solidifies, the hub 10 is inseparably bound to the wheel 1 of the motor vehicle.

## Claims

1. Wheel hub (10) of a motor vehicle comprising:
a tubular body (30) having a coupling opening (11) which is adapted to receive a wheel axis of said motor vehicle;
wherein said tubular body (30) comprises:
a first section (12) with a small diameter (d1);
a second section (14) with a large diameter (d4) which is arranged axially opposite to said first section (12);
a third section (13) with an intermediate diameter (d3) with respect to said first section (12) and said second section (14), which is arranged in an intermediate axial position between said first (12) and second section (14);
said large diameter (d4) being greater than of said intermediate diameter (d3) which in turn is greater than said small diameter (d1);
a plurality of ribs (15) spaced from each other and extending in an axial direction (X-X) onto said tubular body (30),
wherein each rib (15) extends on said first section (12) and said third section (13) and connects to said second section (14),
wherein a maximum rib diameter (d2), defined by ridges (15a) of each rib (15) in a top level, results less or equal to said larger diameter (d4) of said second section (14).

2. Wheel hub (10) according to claim 1, wherein said maximum rib diameter (d2) is equal to said large diameter (d4) of said second section (14) so that the ridge (15a) of each rib (15) is connected at the same height of said second section (14).

3. Wheel hub (10) according to claim 1, wherein said maximum rib diameter (d2) is smaller than to said larger diameter (d4) of said second section (14), so that the ridge (15a) of each rib (15) is connected at a lower height with respect said second section (14).

4. Wheel hub (10) according to claim 3, wherein a differential value (delta) defined as a difference between said larger diameter (d4) of said second section (14) and said maximum rib diameter (d2) is selected between 0.5mm e 10mm, preferably between 2mm e 8mm.

5. Wheel hub (10) according to any of preceding claims, wherein a fourth section (18) with a diameter (d5) arranged adjacent to said second section (14) and arranged opposite to said third section (13) is provided, wherein said diameter (d5) is smaller than said large diameter (d4).

6. Wheel hub (10) according to any of preceding claims, wherein said tubular body (30) comprises a first inclined face (16) that connects said second section (14) to said third section (13), and a second inclined face (17) that connects said third section (13) to said first section (12).

7. Wheel hub (10) according to any of preceding claims, wherein said coupling opening (11) comprises a first portion (11b) and a second portion (11a), in which said second portion (11a) has a diameter greater than said first portion (11b).

8. Wheel (1) of a motor vehicle comprising a housing (1a), wherein a wheel hub (10) according to claims 1-7 is solidly engaged in said housing (1a).

9. Motor vehicle comprising a wheel (1) according to claim 8.

## Patentansprüche

1. Eine Radnabe (10) eines Kraftfahrzeugs, die Folgendes umfasst:
einen rohrförmigen Körper (30) mit einer Kupplungsöffnung (11), die eingerichtet ist, um eine Radachse des genannten Kraftfahrzeugs aufzunehmen;
wobei der genannte rohrförmige Körper (30) Folgendes umfasst:
einen ersten Bereich (12) mit einem kleinen Durchmesser (d1);
einen zweiten Bereich (14) mit einem großen Durchmesser (d4), der axial gegenüber dem genannten ersten Bereich (12) angeordnet ist;
einen dritten Bereich (13) mit einem dazwischenliegenden Durchmesser (d3) in Bezug auf den genannten ersten Bereich (12) und den genannten zweiten Bereich (14), der in einer axialen dazwischenliegenden Position zwischen dem genannten ersten (12) und dem genannten zweiten Bereich (14) angeordnet ist;
wobei der genannte große Durchmesser (d4) größer ist als der genannte dazwischenliegende Durchmesser (d3), der seinerseits größer ist als der genannte kleine Durchmesser (d1);
eine Vielzahl von Rippen (15), die voneinander beabstandet sind und sich in einer axialen Richtung (X-X) auf dem genannten rohrförmigen Körper (30) erstrecken,
wobei sich jede Rippe (15) auf dem genannten ersten Bereich (12) und dem genannten dritten Bereich (13) erstreckt und mit dem genannten zweiten Bereich (14) verbunden ist,
wobei ein maximaler Rippendurchmesser (d2), der durch Stege (15a) jeder Rippe (15) in einer oberen Ebene definiert ist, kleiner oder gleich dem genannten größeren Durchmesser (d4) des genannten zweiten Bereichs (14) ist.

2. Die Radnabe (10) nach Anspruch 1, wobei der genannte maximale Rippendurchmesser (d2) gleich groß ist wie der genannte große Durchmesser (d4) des genannten zweiten Bereichs (14), sodass der Steg (15a) jeder Rippe (15) auf der gleichen Höhe des genannten zweiten Bereichs (14) verbunden ist.

3. Die Radnabe (10) nach Anspruch 1, wobei der genannte maximale Rippendurchmesser (d2) kleiner ist als der genannte größere Durchmesser (d4) des genannten zweiten Bereichs (14), sodass der Steg (15a) jeder Rippe (15) auf einer niedrigeren Höhe in Bezug auf den genannten zweiten Bereich (14) verbunden ist.

4. Die Radnabe (10) nach Anspruch 3, wobei ein Differenzwert (delta), der als eine Differenz zwischen dem genannten größeren Durchmesser (d4) des genannten zweiten Bereichs (14) und dem genannten maximalen Rippendurchmesser (d2) definiert ist, gewählt wird zwischen 0,5 mm und 10 mm, vorzugsweise zwischen 2 mm und 8 mm.

5. Die Radnabe (10) nach irgendeinem der vorstehenden Ansprüche, wobei ein vierter Bereich (18) vorgesehen ist, mit einem Durchmesser (d5), der angrenzend an den genannten zweiten Bereich (14) und gegenüber dem genannten dritten Bereich (13) angeordnet ist, wobei der genannte Durchmesser (d5) kleiner ist als der genannte große Durchmesser (d4).

6. Die Radnabe (10) nach irgendeinem der vorstehenden Ansprüche, wobei der genannte rohrförmige Körper (30) eine erste geneigte Fläche (16) umfasst, die den genannten zweiten Bereich (14) mit dem genannten dritten Bereich (13) verbindet, und eine zweite geneigte Fläche (17), die den genannten dritten Bereich (13) mit dem genannten ersten Bereich (12) verbindet.

7. Die Radnabe (10) nach irgendeinem der vorstehenden Ansprüche, wobei die genannte Kupplungsöffnung (11) einen ersten Abschnitt (11 b) und einen zweiten Abschnitt (11a) umfasst, wobei der genannte zweite Abschnitt (11a) einen größeren Durchmesser als der genannte erste Abschnitt (11 b) aufweist.

8. Ein Rad (1) eines Kraftfahrzeugs, das ein Gehäuse (1a) umfasst, wobei eine Radnabe (10) nach einem der Ansprüche 1-7 fest in das genannte Gehäuse (1a) eingreift.

9. Ein Kraftfahrzeug, das ein Rad (1) nach Anspruch 8 umfasst.

## Revendications

1. Moyeu de roue (10) d'un véhicule à moteur comprenant :
un corps tubulaire (30) ayant une ouverture d'accouplement (11) qui est adaptée pour recevoir un axe d'une roue dudit véhicule à moteur,
le corps tubulaire (30) comprenant :
une première partie (12) avec un petit diamètre (d1),
une deuxième partie (14) avec un grand diamètre (d4), qui est agencée axialement opposée à la première partie (12),
une troisième partie (13) avec un diamètre intermédiaire (d3) par rapport à la première partie (12) et la deuxième partie (14), qui est agencée dans une position axiale intermédiaire entre la première (12) et la deuxième partie (14),
le grand diamètre (d4) étant supérieur au diamètre intermédiaire (d3) qui, à son tour, est supérieur au petit diamètre (d1),
une pluralité d'ailettes (15) espacées les unes des autres et s'étendant dans une direction axiale (X-X) sur le corps tubulaire (30),
chaque ailette (15) s'étendant sur la première partie (12) et la troisième partie (13) et étant attachée à la deuxième partie (14),
un diamètre maximal d'ailette (d2) défini par des arêtes (15a) de chaque ailette (15) à une hauteur maximale, s'avérant inférieur ou égal au grand diamètre (d4) de la deuxième partie (14).

2. Moyeu de roue (10) selon la revendication 1, **caractérisé en ce que** le diamètre maximal d'ailette (d2) est égal au grand diamètre (d4) de la deuxième partie (14) si bien que l'arête (15a) de chaque ailette (15) est reliée à la même hauteur de la deuxième partie (14).

3. Moyeu de roue (10) selon la revendication 1, **caractérisé en ce que** le diamètre maximal d'ailette (d2) est inférieur au grand diamètre (d4) de la deuxième partie (14), si bien que l'arête (15a) de chaque ailette (15) est reliée à une hauteur inférieure par rapport à la deuxième partie (14).

4. Moyeu de roue (10) selon la revendication 3, **caractérisé en ce qu'**une valeur de différence (delta) définie comme une différence entre le grand diamètre (d4) de la deuxième partie (14) et le diamètre maximal d'ailette (d2) est choisie entre 0,5 mm et 10 mm, de préférence entre 2 mm et 8 mm.

5. Moyeu de roue (10) selon l'une des revendications précédentes, **caractérisé en ce qu'**il a une quatrième partie (18) avec un diamètre (d5), agencée à côté de la deuxième partie (14) et agencée à l'opposé de la troisième partie (13), ledit diamètre (d5) étant inférieur au grand diamètre (d4).

6. Moyeu de roue (10) selon l'une des revendications précédentes, **caractérisé en ce que** le corps tubulaire (30) comprend une première face inclinée (16) qui relie la deuxième partie 14) à la troisième partie (13) et une deuxième face inclinée (17) qui relie la troisième partie (13) à la première partie (12).

7. Moyeu de roue (10) selon l'une des revendications précédentes, **caractérisé en ce que** l'ouverture d'accouplement (11) comprend une première partie (11b) et une deuxième partie (11a), la deuxième partie (11a) ayant un diamètre plus grand que la première partie (11b).

8. Roue (1) d'un véhicule à moteur comprenant un logement (1a), **caractérisée en ce qu'**un moyeu de roue (10) selon l'une des revendications 1 à 7 est solidement monté dans le logement (1a).

9. Véhicule à moteur comprenant une roue (1) selon la revendication 8.
